(19) Europäisches Patentamt
European Patent Office
Office européen des brevets

(11) **EP 4 772 479 A1**

(12) **EUROPEAN PATENT APPLICATION**
published in accordance with Art. 153(4) EPC

(43) Date of publication:
**08.07.2026 Bulletin 2026/28**

(21) Application number: **23950676.9**

(22) Date of filing: **29.08.2023**

(51) International Patent Classification (IPC):
**C02F 1/00** (2023.01)     **G05B 23/02** (2006.01)

(52) Cooperative Patent Classification (CPC):
**C02F 1/00; G05B 23/02**

(86) International application number:
**PCT/JP2023/031151**

(87) International publication number:
**WO 2025/046726 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **NAGASE, Takahide
Tokyo 100-8310 (JP)**
• **IMAMURA, Eiji
Tokyo 100-8310 (JP)**
• **YOSHIDA, Wataru
Tokyo 100-8310 (JP)**
• **HAYASHI, Yoshifumi
Tokyo 100-8310 (JP)**

(74) Representative: **Parker, Andrew James
Meissner Bolte Partnerschaft mbB
Patentanwälte Rechtsanwälte
Postfach 86 06 24
81633 München (DE)**

(54) **ABNORMALITY DIAGNOSIS SYSTEM FOR WATER TREATMENT PLANT AND ABNORMALITY DIAGNOSIS METHOD FOR WATER TREATMENT PLANT**

(57)      An abnormality diagnosis system (1000) includes: a measurement value collection unit (101) which collects plural kinds of measurement values in a water treatment process; a measurement value DB (102) in which the measurement values collected by the measurement value collection unit (101) are accumulated; an abnormality detection unit (103) which determines whether an abnormality has occurred in the water treatment plant, on the basis of an abnormality degree calculated from the measurement values; a determination information storage unit (105) which stores determination clustering information (CLM) indicating a relationship between abnormality degrees and abnormality modes; and an abnormality mode determination unit (106) which, when it is determined that the abnormality has occurred, compares the abnormality degree calculated by the abnormality detection unit (103) with the determination clustering information (CLM), to determine the abnormality mode of the occurring abnormality. The abnormality mode is associated with a severity for the water treatment plant.

FIG. 1

**Description**

## TECHNICAL FIELD

The present invention relates to an abnormality diagnosis system for a water treatment plant and an abnormality diagnosis method for a water treatment plant.

## BACKGROUND ART

In a water treatment process by a water treatment plant, both of achievement of predetermined target performance and energy saving in operation need to be ensured. Therefore, it is required that the state of the process relevant to the target performance is monitored, a state change and an abnormality that hamper achievement of the target performance are quickly detected, and measures are taken in advance. Meanwhile, there are a variety of causes of abnormalities in the water treatment process, and it is difficult to monitor all measurement values that can indicate occurrence of an abnormality.

Accordingly, there is a process state monitoring device that calculates a statistic serving as an index indicating the abnormality degree of the process by a method of MSPC (Multi-Variate Statistical Process Control) and determines whether or not there is an abnormality through comparison between the statistic and a threshold (see, for example, Patent Document 1).

## CITATION LIST

## PATENT DOCUMENT

Patent Document 1: Japanese Laid-Open Patent Publication JP 2012 - 138 044 A

## SUMMARY OF THE INVENTION

## PROBLEM TO BE SOLVED BY THE INVENTION

Abnormalities in the water treatment process can include a severe abnormality that adversely affects a reaction system of a water treatment plant, and a minor abnormality that does not hinder normal progress of the water treatment process. An operator preferentially copes with a severe abnormality. In this regard, with the process state monitoring device of Patent Document 1, an operator can know occurrence of an abnormality without monitoring multiple measurement values, but cannot know the severity of the occurring abnormality. Patent Document 1 also discloses that abnormality detection may be performed using, as a trigger, an important variable that an operator recognizes sufficiently well, whereby only an abnormality sign that the operator desires to know may be detected. However, the index of the abnormality degree in the water treatment process and the severity of the abnormality are not always in a simple proportional relationship, and it is not easy to accurately find an important variable that corresponds to an abnormality of which the severity is great.

The present invention has been made to solve the above problem, and an object of the present invention is to provide an abnormality diagnosis system for a water treatment plant and an abnormality diagnosis method for a water treatment plant that can detect occurrence of an abnormality in a water treatment process and performs diagnosis for the severity of the detected abnormality.

MEANS **TO** SOLVE **THE PROBLEM**

An abnormality diagnosis system for a water treatment plant according to the present invention is an abnormality diagnosis system for a water treatment plant, which performs diagnosis for an abnormality of the water treatment plant which is a monitoring target, the abnormality diagnosis system including: a measurement value collection unit which collects a plurality of kinds of measurement values in a water treatment process performed by the water treatment plant; a measurement value storage unit in which the measurement values collected by the measurement value collection unit are accumulated; an abnormality detection unit which determines whether or not an abnormality has occurred in the water treatment plant, on the basis of an abnormality degree calculated from the measurement values; an abnormality mode determination information storage unit which stores abnormality mode determination information indicating a relationship between the abnormality degree and an abnormality mode; an abnormality mode determination unit which, in a case where it is determined that the abnormality has occurred, compares the abnormality degree calculated by the abnormality detection unit with the abnormality mode determination information, to determine the abnormality mode of the occurring abnormality; and a diagnosis result display unit which displays a result of the determination. The abnormality mode is associated with a severity for the water treatment plant.

An abnormality diagnosis method for a water treatment plant according to the present invention is an abnormality diagnosis method for a water treatment plant, which performs diagnosis for an abnormality of the water treatment plant which is a monitoring target, the abnormality diagnosis method including: a measurement value collection step of collecting a plurality of kinds of measurement values in a water treatment process performed by the water treatment plant; a measurement value accumulation step of accumulating the measurement values collected in the measurement value collection step; an abnormality detection step of determining whether or not an abnormality has occurred in the water treatment plant, on the basis of an abnormality degree calculated from the measurement values; an abnormality mode determination step of, in a case where it is determined that the abnormality has occurred, comparing the abnormality degree calculated in the abnormality detection step with abnormality mode determination information indicating a relationship between the abnormality degree and an abnormality mode, to determine the abnormality mode of the occurring abnormality; and a diagnosis result display step of displaying a result of the determination. The abnormality mode is associated with a severity for the water treatment plant.

**EFFECT OF THE INVENTION**

The abnormality diagnosis system for the water treatment plant and the abnormality diagnosis method for the water treatment plant according to the present invention can detect occurrence of an abnormality in a water treatment process and performs diagnosis for the severity of the detected abnormality.

**BRIEF DESCRIPTION OF THE DRAWINGS**

FIG. 1 is a block diagram showing a configuration of an abnormality diagnosis system for a water treatment plant according to Embodiment 1.
FIG. 2 is a block diagram showing a configuration of the abnormality detection unit according to Embodiment 1.
FIG. 3 shows an example of determination clustering information according to Embodiment 1 and shows a determination clustering map.
FIG. 4 shows an example of a relationship between an abnormality mode and a severity of an abnormality according to Embodiment 1.
FIG. 5 shows an example of a hardware configuration of an abnormality diagnosis device according to Embodiment 1.
FIG. 6 is a flowchart showing operation of the abnormality diagnosis system for the water treatment plant according to Embodiment 1.
FIG. 7 is a flowchart showing an abnormality detection step according to Embodiment 1.
FIG. 8 is a block diagram showing a configuration of an abnormality diagnosis system for a water treatment plant according to Embodiment 2.
FIG. 9 is a block diagram showing a configuration of a past abnormality learning device according to Embodiment 2.
FIG. 10 is a flowchart showing operation of the abnormality diagnosis system for the water treatment plant according to Embodiment 2.
FIG. 11 is a flowchart showing a learning step according to Embodiment 2.
FIG. 12 is a block diagram showing a configuration of an abnormality diagnosis system for a water treatment plant according to Embodiment 3.
FIG. 13 is a block diagram showing a configuration of a simulation device according to Embodiment 3.
FIG. 14 is a flowchart showing operation of the abnormality diagnosis system for the water treatment plant according to Embodiment 3.
FIG. 15 is a flowchart showing a simulation step according to Embodiment 3.

**DESCRIPTION OF EMBODIMENTS**

Embodiment 1

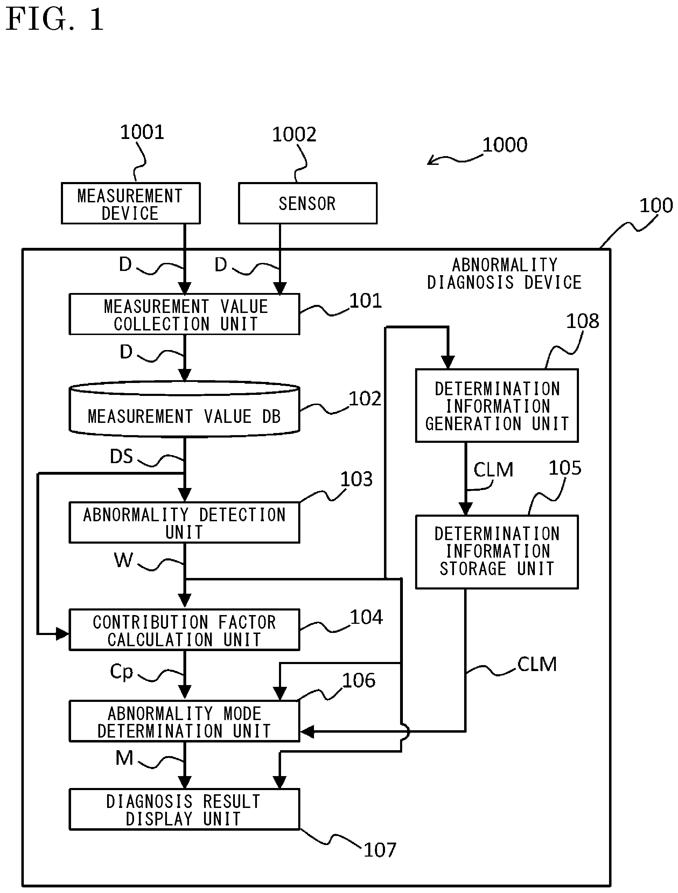

Embodiment 1 will be described with reference to FIG. 1 to FIG. 7. FIG. 1 is a block diagram showing a configuration of an abnormality diagnosis system for a water treatment plant according to Embodiment 1. An abnormality diagnosis system 1000, i.e., the abnormality diagnosis system for the water treatment plant, includes an abnormality diagnosis device 100 which detects an abnormality occurring in a water treatment process of a water treatment plant (not shown) which is a monitoring target, and determines an abnormality mode of the occurring abnormality, and a measurement device 1001 and a sensor 1002 which are connected to the abnormality diagnosis device 100 via a network and measure characteristic values of the water treatment plant which is a monitoring target. The abnormality diagnosis device 100 performs detection for an abnormality of the water treatment plant and determination for an abnormality mode of the occurring abnormality, using measurement values acquired by the measurement device 1001 and the sensor 1002.

Basically, the water treatment plant in Embodiment 1 is assumed to be a sewage treatment plant, but a water treatment plant other than a sewage treatment plant, e.g., a desalination plant, is also applicable.

The measurement device 1001 includes various instruments (not shown). Specifically, the measurement device 1001 includes instruments such as a flowmeter which indicates flow rates in equipment and tanks in the sewage treatment plant, and a DO meter (dissolved oxygen meter), a MLSS (Mixed Liquor Suspended Solid) meter, an NH4 meter (ammonia meter), an ORP meter (oxidation-reduction potential meter), a TN meter (total nitrogen meter), and a TP meter (total phosphorus meter), which indicate water qualities in the tanks. The measurement device 1001 transmits measurement value data D which is data of various measurement values, to the abnormality diagnosis device 100 via the network. The measurement value data D includes data of a plurality of kinds of measurement values. The measurement value data D may include data indicating a measurement time.

The sensor 1002 includes various sensors (not shown) which detect various parameters indicating water qualities in the tanks, and includes various sensors which detect an ammonia nitrogen concentration, a nitrate nitrogen concentration, a total nitrogen concentration, a phosphate phosphorus concentration, and a total phosphorus concentration of water in each tank, for example. The sensor 1002 transmits data of the measurement values acquired by the various sensors, as the measurement value data D, to the abnormality diagnosis device 100 via the network. A target of the measurement device 1001 and a measurement target of the sensor 1002 are different from each other, but data of their respective measurement values are both treated as the measurement value data D.

The abnormality diagnosis device 100 includes: a measurement value collection unit 101 which collects the measurement value data D; a measurement value database 102 (hereinafter, measurement value DB 102), i.e., a measurement value storage unit, in which the collected measurement value data D are accumulated; an abnormality detection unit 103 which detects an abnormality occurring in the sewage treatment plant on the basis of the measurement value data D; a contribution factor calculation unit 104 which calculates a contribution degree described later; a determination information storage unit 105 i.e., an abnormality mode determination information storage unit, which stores determination clustering information CLM to be used for determining an abnormality mode, i.e., abnormality mode determination information; an abnormality mode determination unit 106 which determines an abnormality mode, using the determination clustering information CLM; a diagnosis result display unit 107 which displays a result of determination of the abnormality mode, and the like, to an operator; and a determination information generation unit 108 which generates and updates the determination clustering information CLM.

The measurement value collection unit 101 collects the measurement value data D by receiving the measurement value data D from the measurement device 1001 and the sensor 1002, and outputs the collected measurement value data D to the measurement value DB 102. In Embodiment 1, data (measurement value data D) of measurement values are acquired by the measurement device 1001 and the sensor 1002, and the measurement value data D is transmitted to the abnormality diagnosis device 100 via the network.

However, data of measurement values may be acquired from a result of water quality analysis performed manually, and an operator or the like may input the acquired data of measurement values to the abnormality diagnosis device 100. In this case, input of the data of measurement values is performed via a HMI (Human Machine Interface), for example.

The measurement value DB 102 is a database in which the measurement value data D is stored while being arranged in a certain format, whereby the measurement value data D is accumulated therein. While the measurement value data D is acquired from the measurement value collection unit 101, the acquired measurement value data D is sequentially stored into the measurement value DB 102, whereby the measurement value data D is accumulated therein.

In one of methods for accumulating the measurement value data D, a flow rate and a water quality at the same time are sequentially stored as the same series of data. In a case where there are a plurality of sensors that measure the same inflow water, there is a possibility that a difference in measurement times occurs between the plurality of sensors. Considering this, differences between measurement times of the plurality of sensors may be corrected on the basis of a period in which inflow water stays in the sewage treatment plant, and measurement values in tanks with respect to the same inflow water may be stored as the same series of data.

The abnormality detection unit 103 calculates an abnormality degree by a method of MSPC analysis, using the measurement value data D accumulated in the measurement value DB 102, and detects occurrence of an abnormality. The abnormality detection unit 103 outputs an abnormality presence/absence determination result W which indicates whether or not there is an abnormality, to the contribution factor calculation unit 104, the abnormality mode determination unit 106, the diagnosis result display unit 107, and the determination information generation unit 108.

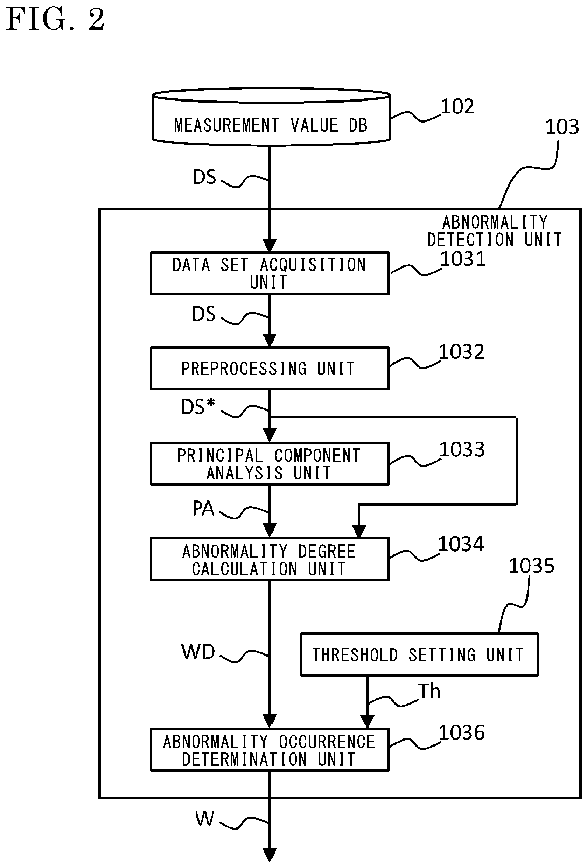

The abnormality detection unit 103 will be further described. FIG. 2 is a block diagram showing a configuration of the abnormality detection unit according to Embodiment 1. The abnormality detection unit 103 includes a data set acquisition unit 1031 which acquires a data set DS from the measurement value DB 102, a preprocessing unit 1032 which performs preprocessing on the data set DS and outputs the resultant data as a preprocessed data set DS*, a principal component analysis unit 1033 which executes PCA analysis (Principal Component Analysis) on the preprocessed data set DS* and generates principal component axis information PA, an abnormality degree calculation unit 1034 which calculates the abnormality degree WD using the principal component axis information PA and the preprocessed data set DS*, a threshold setting unit 1035 which sets a threshold Th for abnormality determination, and an abnormality occurrence determination unit 1036 which determines whether or not there is an abnormality on the basis of a relationship between the abnormality degree WD and the threshold Th.

Among the measurement value data D accumulated in the measurement value DB 102, the data set acquisition unit 1031 acquires, for example, a combination of the same series of measurement value data D (a combination of measurement value data D of which measurement times are the same), as one data set DS. The data set DS acquired by the data set acquisition unit 1031 is different between a case of PCA analysis and a case of calculation of an abnormality degree described later. It is desirable that the data set DS for PCA analysis is a data set for a certain period or longer, not including data when abnormality has occurred.

As an example of a case of a sewage treatment plant, only the measurement value data D for sunny days in one month in which steady operation was performed are extracted from the measurement value DB 102 and then used as a data set for PCA. In a case of calculation of the abnormality degree, all the data sets DS of which the measurement times are included in a target period for abnormality detection are acquired.

The preprocessing unit 1032 acquires the data set DS from the data set acquisition unit 1031, and performs preprocessing on the data set DS. The preprocessing includes complementation processing for missing values, removal processing for outliers, standardization processing, moving average processing, and the like with respect to the data sets DS. The preprocessing unit 1032 outputs the preprocessed data set DS* that has undergone the preprocessing as described above, to the principal component analysis unit 1033 and the abnormality degree calculation unit 1034.

The principal component analysis unit 1033 performs PCA analysis on the data set DS*. PCA analysis is one of multivariate analysis methods aiming at feature extraction and dimension reduction for data. In PCA analysis, in order to grasp a correlation among variables, a combined variable called a principal component is generated through linear combination of a plurality of variables. Since the principal component is a linear combination of original variables, in a case of considering data of original variables, principal component data is obtained from original data. The first principal component corresponds to a direction in which a variance of the principal component data is maximized, and the first principal component axis is set in this direction.

Here, the first principal component corresponds to a direction that can most express variation in data. The second principal component corresponds to a direction in which a variance of the principal component data is maximized among directions orthogonal to the first principal component, and the second principal component axis is set in this direction. The third or subsequent principal component corresponds to a direction in which a variance of the principal component data is maximized among directions orthogonal to all the principal component axes that have already been set. By sequentially calculating the first principal component, the second principal component, the third principal component, ..., N principal component axes (first to Nth principal component axes) are set for N-dimensional data. The principal component analysis unit 1033 outputs information about principal component axes such as conversion formulae from original variables, as principal component axis information PA.

In Embodiment 1, PCA analysis is used, but a method other than PCA analysis may be used as long as the method is data processing that enables calculation of the abnormality degree WD described later.

The abnormality degree calculation unit 1034 acquires the principal component axis information PA from the principal component analysis unit 1033, acquires the data set DS* as a target of abnormality detection from the preprocessing unit 1032, and calculates the abnormality degree WD using the principal component axis information PA and the data set DS*. The "abnormality degree" in Embodiment 1 includes two kinds of statistics described below, i.e., a $T^2$ statistic (hereinafter, referred to as $T^2$ value) and a Q statistic (hereinafter, referred to as Q value), and the abnormality degree calculation unit 1034 calculates the $T^2$ value and the Q value for each measurement time. The abnormality degree calculation unit 1034 outputs data of the calculated $T^2$ value and Q value as the abnormality degree WD to the abnormality occurrence determination unit 1036.

The $T^2$ value is calculated using (Formula 1).

[Mathematical 1]

$$T^2 = \sum_{r=1}^{R} \frac{t_r^2}{\sigma_{t_r}^2} \quad \cdots (1)$$

In (Formula 1), $t_r$ denotes a principal component score of an rth component, and $\sigma_{t_r}$ is a standard deviation of $t_r$. The $T^2$ value shown in (Formula 1) is a value obtained by normalizing the square of a distance of data from the origin in the principal component space with the square of a standard deviation of each principal component score. The principal component space is a space constituted by principal component axes of principal components to be considered among principal components obtained through principal component analysis. In a case of (Formula 1), R principal components are considered, and the principal component space is constituted by principal component axes of the first to Rth principal components. The principal component score is a value of a coordinate on a principal component axis in the principal component space.

The Q value is calculated using (Formula 2).

[Mathematical 2]

$$Q = \sum_{p=1}^{P} (x_p - \widehat{x}_p)^2 \quad \cdots (2)$$

In (Formula 2), $x_p$ denotes a pth component of the measurement value data D which is the original data, and $x_p$ with a hat symbol is a pth component when $x_p$ has undergone dimension reduction through PCA analysis and reconstruction in P dimensions (inverse mapping from the dimension-reduced space). In a case where the original data is N-dimensional data, P is equal to N. The Q value represents a difference from the original data, which remains even after inverse mapping from the dimension-reduced space, and expresses, as a residual, information lost as a result of dimension reduction through PCA analysis. This represents a part that cannot be expressed by a PCA model, for the original data.

In MSPC, the $T^2$ value and the Q value are managed independently of each other, and when one of the $T^2$ value and the Q value has exceeded a management limit, it is determined that an abnormality has occurred. That is, each of the $T^2$ value and the Q value is an abnormality degree. The $T^2$ value and the Q value are in a complementary relationship, and by managing the two values independently of each other, it is possible to manage both of a part having a correlation and a part not having a correlation in a variable space when measurement value data are used as variables.

The threshold setting unit 1035 sets the threshold Th for abnormality determination, and outputs the threshold Th to the abnormality occurrence determination unit 1036. The threshold Th is generally provided as a value "m + 3σ" for each of the $T^2$ value and the Q value. Here, m and σ denote an average value and a standard deviation of abnormality degrees in a case where abnormality degrees ($T^2$ value and Q value) are calculated through all times, and are an average value and a standard deviation obtained in a case where abnormality degrees are calculated for collection of data in a normal state not including data in an abnormality occurring state.

As the threshold Th, a threshold Th_$T^2$ for the $T^2$ value and a threshold Th_Q for the Q value are used, and both thresholds are collectively treated as the threshold Th. The threshold Th is not limited to values defined as described above, and may be other values uniquely calculated in accordance with a purpose.

The abnormality occurrence determination unit 1036 determines whether or not an abnormality has occurred, on the basis of a relationship between the abnormality degree WD and the threshold Th at the present time, calculated from the data set DS* at the present time (the data set DS* constituted of measurement value data D of which the measurement time is the present time). Specifically, in a case where one of the $T^2$ value and the Q value at the present time has exceeded the threshold Th, i.e., one of ($T^2$ value at present time) > (threshold Th_$T^2$ for $T^2$ value) and (Q value at present time) > (threshold Th_Q for Q value) is satisfied, the abnormality occurrence determination unit 1036 determines that an abnormality has occurred.

That is, the abnormality occurrence determination unit 1036 determines whether or not an abnormality has occurred, by comparing the abnormality degree WD and the threshold Th. The abnormality occurrence determination unit 1036 outputs the principal component axis information PA which is a result of principal component analysis, the calculated abnormality degree WD, and a result of abnormality occurrence determination, collectively as an abnormality presence/absence determination result W. That is, the abnormality presence/absence determination result W includes the principal component axis information PA and the abnormality degree WD.

Instead of the method using only the abnormality degree WD at the present time for determination, determination based on the threshold Th as described above may be performed for the abnormality degree WD over the last certain period (e.g., the last five minutes). In this case, if a period in which the abnormality degree WD is greater than the threshold Th (a period in which one of the $T^2$ value and the Q value is greater than the threshold) is longer, it is determined that an abnormality has occurred at the present time. In addition, in a case where the abnormality degree WD has continued exceeding the threshold Th for a certain period, it may be determined that an abnormality has occurred.

The contribution factor calculation unit 104 calculates a contribution degree of each measurement value, for an occurring abnormality. The "contribution degree" indicates the degree of an influence that each measurement value causes to variation in the abnormality degree WD, and includes a contribution degree CpT to the $T^2$ value and a contribution degree CpQ to the Q value. The contribution factor calculation unit 104 acquires the data set DS from the measurement value DB 102 and acquires the abnormality presence/absence determination result W from the abnormality detection unit 103. Then, when the abnormality presence/absence determination result W indicates occurrence of an abnormality, the contribution factor calculation unit 104 calculates a contribution degree using the measurement value data D at the present time included in the data set DS.

The contribution degree CpT to the $T^2$ value is calculated by the following (Formula 3).
[Mathematical 3]

$$C_p^{[T^2]} \;\; = \;\; t\Sigma_T^{-1}x_p v_p \;\;\; \cdots (3)$$

On the left-hand side of (Formula 3), Cp with bracketed $T^2$ denotes the value of the contribution degree CpT to the $T^2$ value. On the right-hand side of (Formula 3), t denotes a principal component vector, $\Sigma$ denotes a variance covariance matrix, "-1" at the upper right indicates an inverse matrix, $x_p$ is data of the factor p, i.e., a pth component of the measurement value data D which is the original data, and $v_p$ is a transposed vector of a row vector of the pth row of a loading matrix. As the contribution degree CpT to the $T^2$ value becomes greater, the possibility that the corresponding measurement value (the measurement value of the pth component) is a cause of abnormality becomes higher when the $T^2$ value exceeds the threshold Th_$T^2$.

The contribution degree CpQ to the Q value is calculated by the following (Formula 4).
[Mathematical 4]

$$C_p^{[Q]} \;\; = \;\; (x_p - \hat{x}_p)^2 \;\;\; \cdots (4)$$

On the left-hand side of (Formula 4), Cp with bracketed Q denotes the value of the contribution degree CpQ to the Q value. On the right-hand side of (Formula 4), $x_p$ denotes a pth component of the measurement value data D which is the original data, and $x_p$ with a hat symbol is a pth component when $x_p$ has undergone dimension reduction through PCA analysis and reconstruction in P dimensions (inverse mapping from the dimension-reduced space). As the contribution degree CpQ to the Q value becomes greater, the possibility that the corresponding measurement value (the measurement value of the pth component) is a cause of the abnormality becomes higher when the Q value exceeds the threshold Th_Q.

The contribution factor calculation unit 104 specifies, as a cause possibility factor p*, a factor p ranked high in the order of the magnitudes of the contribution degrees CpT and the contribution degrees CpQ calculated for factors p. The number of factors p to be specified as cause possibility factors p* is arbitrary. The contribution factor calculation unit 104 outputs data of the contribution degree CpT and the contribution degree CpQ and data of the cause possibility factor p*, as contribution degree data Cp.

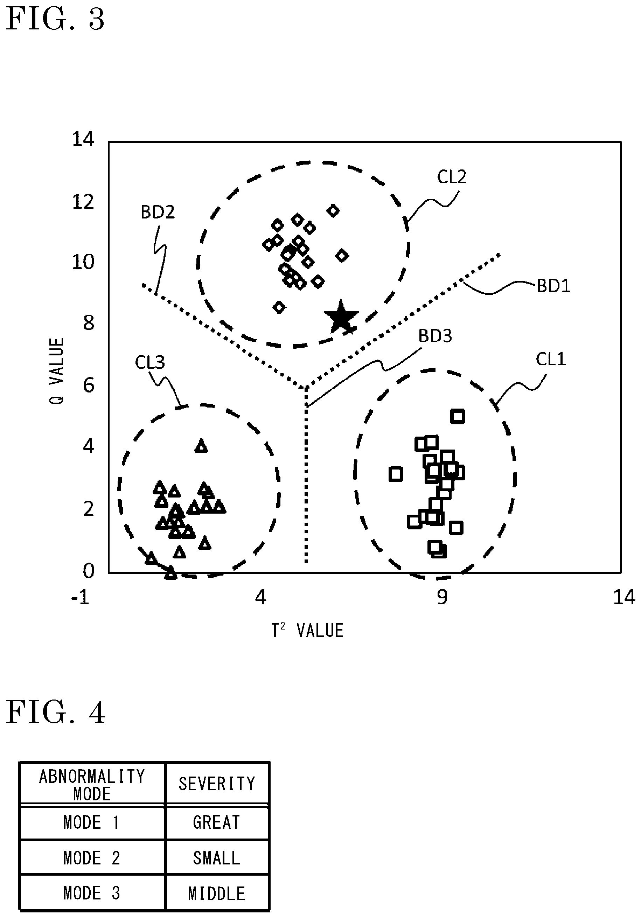

The determination information storage unit 105 stores determination clustering information CLM. The determination clustering information CLM is information in which the values of abnormality degrees such as the $T^2$ value and the Q value are associated with abnormality modes of abnormalities that are actually occurring, and is shown as a clustering map in a $T^2$-Q space with the $T^2$ value as the horizontal axis and the Q value as the vertical axis, as in a determination clustering map shown in FIG. 3. Three kinds of plotted marks shown in FIG. 3, i.e., square, rhombus, and triangle, indicate the $T^2$ values and the Q values when abnormalities in various abnormality modes occur. Generation and update of the determination clustering information CLM are performed by the determination information generation unit 108 described later.

In FIG. 3, a star-shaped plotted mark indicates the $T^2$ value and the Q value at the present time. In the example shown in FIG. 3, a region of plotted squares is defined as a cluster CL1, a region of plotted rhombuses is defined as a cluster CL2, and a region of plotted triangles is defined as a cluster CL3. For generation of clusters from plotted points, for example, a clustering method such as a k-means method is used. A boundary BD1 indicated by a dotted line is a boundary between the cluster CL1 and the cluster CL2. Similarly, a boundary BD2 is a boundary between the cluster CL2 and the cluster CL3, and a boundary BD3 is a boundary between the cluster CL3 and the cluster CL1.

FIG. 4 shows an example of a relationship between abnormality modes and severities of abnormalities according to Embodiment 1. In the example shown in FIG. 4, when an abnormality mode indicated by the cluster CL1 in which the $T^2$ value is great and the Q value is small is defined as a mode 1, the abnormality mode (mode 1) of the cluster CL1 is an abnormality mode in which the degree (severity) of an adverse effect caused to the sewage treatment plant is great. When the abnormality mode indicated by the cluster CL2 in which the $T^2$ value is middle and the Q value is great is defined as a mode 2, the abnormality mode (mode 2) of the cluster CL2 is an abnormality mode having a small severity. When the abnormality mode indicated by the cluster CL3 in which the $T^2$ value and the Q value are small is defined as a mode 3, the abnormality mode (mode 3) of the cluster CL3 is an abnormality mode having a middle severity.

The relationship between clusters and severities as described above is merely an example. For example, only an abnormality mode in which the Q value exceeds a predetermined threshold may be defined as an abnormality mode having a great severity. Also, the above setting of the abnormality modes is merely an example. The abnormality modes may be arbitrarily set so as to be associated with severities, and the levels of severities to be set (the number of clusters to be set) may be arbitrarily determined.

In the sewage treatment plant, examples of abnormalities in abnormality modes having great severities include severe process abnormalities such as an abnormality of the flow rate or contained components of inflow water, an abnormality of activity of microorganisms in a bioreactor tank, an abnormality of operation equipment such as a pump and an agitator, and an abnormality of a water quality instrument as a legal regulation target for treated water. Examples of abnormalities having small severities include an abnormality of a water quality instrument other than a legal regulation target, an abnormality of a water quality instrument that can be replaced with manual analysis or the like, and deviation of a measurement value due to stain of a sensor. In Embodiment 1, the clustering map as shown in FIG. 3 is generated and used as the determination clustering information CLM. However, the determination clustering information CLM may be generated through extraction of know-how from operation manipulation information or hearing to an operator.

The abnormality mode determination unit 106 determines the abnormality mode of an abnormality when the abnormality has occurred, on the basis of the abnormality presence/absence determination result W and the determination clustering information CLM. In the example shown in FIG. 3, as described above, the star-shaped plotted mark indicates the $T^2$ value and the Q value at the present time, and is included in the region of the cluster CL2. Therefore, the abnormality mode of the abnormality at the present time is determined to be the abnormality mode of the cluster CL2 (the abnormality mode having a small severity). In this way, by comparing the calculated abnormality degree at the present time with the determination clustering information CLM, it is possible to determine the abnormality mode of the abnormality at the present time that is newly detected. The abnormality mode determination unit 106 outputs a result of determination for the abnormality mode, as an abnormality mode determination result M.

Further, the abnormality mode determination unit 106 of Embodiment 1 can narrow down abnormality modes on the basis of the contribution degree, and perform determination using the determination clustering information CLM after narrowing down the highly possible abnormality modes. Specifically, the severity is approximately estimated from the cause possibility factor p* and the magnitudes of the contribution degree CpT and the contribution degree CpQ of the cause possibility factor p*. For example, in a case where it is known that an abnormality to which the factor 1 (p = 1) greatly contributes has a great severity, and p = 1 is included among the cause possibility factors p*, it is found that the abnormality mode is highly likely to be an abnormality mode having a great or middle severity.

After abnormality modes are narrowed down as described above, the $T^2$ value and the Q value at the present time are compared with the determination clustering information CLM, to determine an abnormality mode. In the above example, narrowing down of the abnormality modes is performed on the basis of a combination of the cause possibility factors p* and the contribution degrees thereof. However, narrowing down may be performed using only the values of contribution degrees. Narrowing down of abnormality modes is not essential. In a case of not performing narrowing down, the contribution factor calculation unit 104 may be omitted.

In a case of performing narrowing down based on contribution degrees as described above, determination for an abnormality mode through comparison with the determination clustering information CLM is performed in combination, whereby accuracy of determination for an abnormality mode can be improved. In a case of using only comparison with the determination clustering information CLM, it might be difficult to determine the corresponding cluster, depending on the value of the abnormality degree at the present time. For example, in a case where a star mark is present on the boundary BD1 or near the boundary BD1 in the example shown in FIG. 3, it may be difficult to determine which of the cluster CL1 and the cluster CL2 the star mark belongs to.

Such a problem is more likely to occur when abnormality modes are more finely classified. Here, by combining narrowing down based on contribution degrees, an abnormality mode can be accurately determined even in a case where abnormality mode determination based on only comparison with the determination clustering information CLM is difficult, and thus accuracy of determination for an abnormality mode can be improved.

The diagnosis result display unit 107 is formed by a display device such as a liquid crystal display, for example, and displays a result of determination for whether or not an abnormality has occurred, the abnormality mode of the occurring abnormality, and the severity thereof, in accordance with contents of the abnormality presence/absence determination result, the abnormality mode determination result M, and the like. In addition, the diagnosis result display unit 107 may display an alert for the abnormality, the abnormality degree, the contribution degree, the cause possibility factor, and the like, i.e., values calculated through a procedure of determination for whether or not an abnormality has occurred, determination for an abnormality mode, and the like.

In addition, in a case where the occurring abnormality is determined to be a severe process abnormality as a result of abnormality mode determination, the diagnosis result display unit 107 may display an indication to request an operator to preferentially cope with the abnormality. In Embodiment 1, the abnormality diagnosis device 100 includes the diagnosis result display unit 107. However, a device other than the abnormality diagnosis device 100 may include the diagnosis result display unit 107. In this case, the abnormality diagnosis device 100 includes a transmission unit for transmitting the abnormality mode determination result M to the other device via the network, for example.

The determination information generation unit 108 generates the determination clustering information CLM, and updates the determination clustering information CLM as necessary. Generation and update of the determination clustering information CLM are performed on the basis of a relationship between the abnormality mode of an abnormality occurring in actual operation and the abnormality degree WD when the abnormality has occurred.

The determination information generation unit 108 acquires the abnormality presence/absence determination result W from the abnormality detection unit 103, and generates the determination clustering information CLM on the basis of a relationship between the abnormality degree WD included in the abnormality presence/absence determination result W and the abnormality mode of the occurring abnormality. Here, since the abnormality mode is associated with the severity of the abnormality, the determination information generation unit 108 is considered to generate the determination clustering information CLM on the basis of a relationship between the abnormality degree WD acquired in actual operation and the severity of the abnormality having the acquired abnormality degree WD.

In a case where the number of data in actual operation is small at a stage just after actual operation is started or the like, accuracy of the determination clustering information CLM is not sufficient. In such a case, abnormality mode determination may be performed by another method, or data of abnormality mode determination results may be accumulated using a provisional determination clustering map, and the determination clustering information CLM may be regarded as being generated at the time when a certain number of results have been acquired. When the determination clustering information CLM is generated, the determination information generation unit 108 stores the generated determination clustering information CLM into the determination information storage unit 105.

Thereafter, abnormality mode determination is performed using the determination clustering information CLM stored in the determination information storage unit 105. The determination information generation unit 108 acquires the abnormality mode determination result M at each time, and if update is needed, e.g., when there is a problem with accuracy of the abnormality mode determination result M, the determination information generation unit 108 updates the determination clustering information CLM accordingly. Input of the abnormality mode determination result M to the determination information generation unit 108 is not shown in FIG. 1.

Update of the determination clustering information CLM will be described. In general, in a case of performing determination using clustering information, the larger the number of data for generating clusters is, the higher the determination accuracy is. Conversely, at a stage when the number of collected data is small, determination accuracy is relatively low. In Embodiment 1, an abnormality mode is determined through comparison of the $T^2$ value and the Q value with the determination clustering information CLM as described above.

However, a result of determination using the determination clustering information CLM might be different from an abnormality mode determination result based on extraction of know-how from operation manipulation information or hearing to an operator and the abnormality mode determination result based on hearing to an operator or the like might be evaluated as correct. In such a case, accuracy of the abnormality mode determination result M is evaluated as having a problem, and accuracy of the determination clustering information CLM is also evaluated as having a problem.

Therefore, the determination clustering information CLM is updated so as to match the abnormality mode determination result based on hearing to an operator or the like. Update of the determination clustering information CLM is performed on the basis of a relationship between the abnormality degree WD acquired in actual operation and the severity of the abnormality having the acquired abnormality degree WD, as in the case of generating the determination clustering information CLM described above.

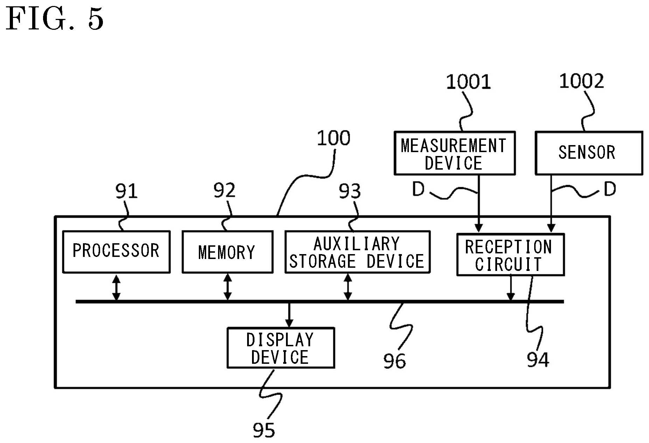

Next, a hardware configuration for implementing the function units of the abnormality diagnosis device 100 will be described. FIG. 5 shows an example of a hardware configuration of the abnormality diagnosis device according to Embodiment 1. The abnormality diagnosis device 100 is mainly composed of a processor 91, a memory 92 as a primary storage, and an auxiliary storage device 93. The processor 91 is composed of a CPU (Central Processing Unit), an ASIC (Application Specific Integrated Circuit), a DSP (Digital Signal Processor), a FPGA (Field Programmable Gate Array), and the like, for example.

The memory 92 is composed of a volatile storage device such as a random access memory, and the auxiliary storage device 93 is composed of a nonvolatile storage device such as a flash memory, a hard disk, or the like. A predetermined program to be executed by the processor 91 is stored in the auxiliary storage device 93, and the processor 91 reads and executes the program as appropriate, to perform various calculation processes. At this time, the predetermined program is temporarily stored into the memory 92 from the auxiliary storage device 93, and the processor 91 reads the program from the memory 92. The calculation processes by the function units shown in FIG. 1 and FIG. 2 are implemented by the processor 91 executing the predetermined program as described above. The result of the calculation processes by the processor 91 is stored into the memory 92 once, and then is stored into the auxiliary storage device 93 in accordance with a purpose of the executed calculation process.

The abnormality diagnosis device 100 includes a reception circuit 94 which receives the measurement value data D from the measurement device 1001 and the sensor 1002, and a display device 95 which displays a result of abnormality mode determination and the like. The processor 91, the memory 92, the auxiliary storage device 93, the reception circuit 94, and the display device 95 are connected via a system bus 96. In a case of causing another device to display an abnormality mode determination result or the like, the reception circuit 94 may be replaced with a transmission/reception circuit or a transmission circuit may be separately added, and the abnormality mode determination result M or the like may be transmitted by the transmission/reception circuit or the transmission circuit.

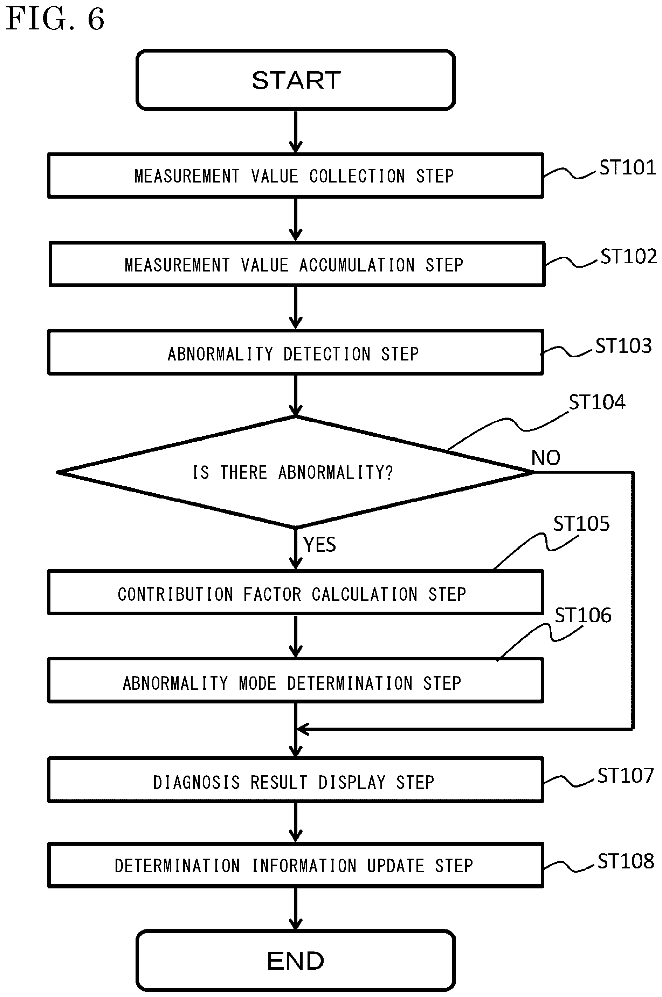

Next, operation will be described. FIG. 6 is a flowchart showing operation of the abnormality diagnosis system for the water treatment plant according to Embodiment 1. It is assumed that the determination clustering information CLM has already been generated. First, the measurement value data D which are data of various measurement values indicating the state of the sewage treatment plant which is a monitoring target are acquired from the measurement device 1001 and the sensor 1002, whereby the measurement value data D are collected (step ST101: measurement value collection step).

Next, the collected measurement value data D are stored while being arranged in a certain format, whereby the measurement value data D are accumulated (step ST102: measurement value accumulation step). Accumulation of the measurement value data D is performed by sequentially storing the collected measurement value data D. The method for accumulating the measurement value data D is as described above.

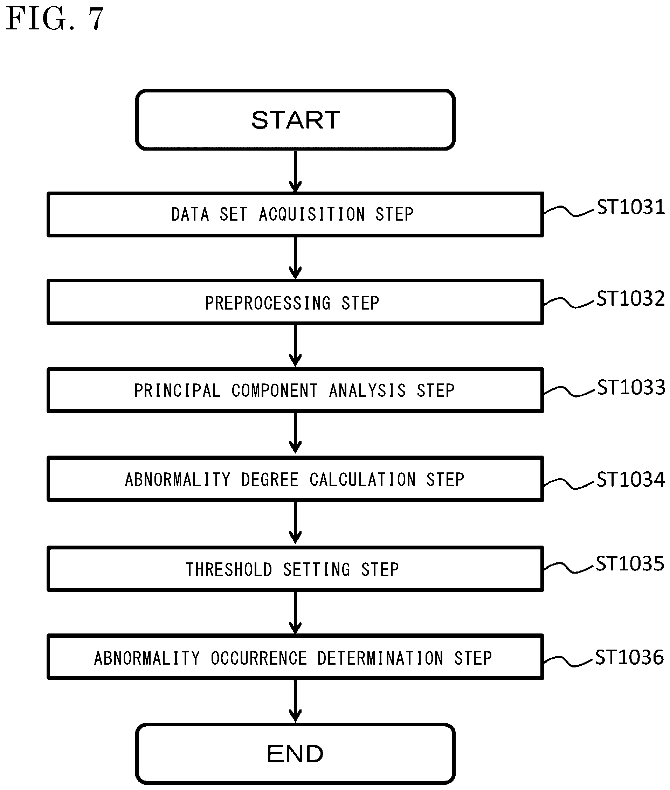

Next, abnormality degrees are calculated from the accumulated measurement value data D, to detect occurrence of an abnormality (step ST103: abnormality detection step). In the abnormality detection step, occurrence of an abnormality is detected by a method of MSPC analysis. FIG. 7 is a flowchart showing the abnormality detection step according to Embodiment 1, and shows an MSPC analysis flow according to Embodiment 1. First, a combination of the same series of measurement value data D, or the like is acquired as one data set DS (step ST1031: data set acquisition step), and preprocessing is performed on the data set DS, to obtain a preprocessed data set DS* (step ST1032: preprocessing step). The preprocessing on the data set DS is as described above.

Next, PCA analysis is performed on the data set DS* (step ST1033: principal component analysis step). The PCA analysis is as described above, and principal component axis information PA which is information about each principal component axis is obtained.

Next, an abnormality degree is calculated using the principal component axis information PA and the data set DS* which is a target of abnormality detection (step ST1034: abnormality degree calculation step). The abnormality degree is as described above. In Embodiment 1, the $T^2$ value and the Q value are calculated, and data of the calculated $T^2$ value and Q value is used as an abnormality degree WD.

Next, a threshold Th for abnormality determination is set (step ST1035: threshold setting step). A specific setting method for the threshold Th is as described above.

Next, whether or not an abnormality has occurred is determined on the basis of a relationship between the abnormality degree WD at the present time and the threshold Th, to obtain an abnormality presence/absence determination result W (step ST1036: abnormality occurrence determination step). As described above, in the determination, if one of the $T^2$ value and the Q value at the present time has exceeded the threshold Th, it is determined that an abnormality has occurred. In addition, as described above, whether or not an abnormality has occurred may be determined on the basis of which of a period in which the abnormality degree WD is greater than the threshold Th and a period in which the abnormality degree WD is not greater than the threshold Th is longer in the last certain period, whether or not the abnormality degree WD has continued exceeding the threshold Th for a certain period, or the like.

In a case where whether or not an abnormality has occurred is determined in real time for the sewage treatment plant that is being operated, the execution cycle may be different between: the principal component analysis step and the threshold setting step; and the other steps (data set acquisition step, preprocessing step, abnormality degree calculation step, and abnormality occurrence determination step). For example, the former steps may be performed in a first execution cycle (e.g., 24 hours), and the latter steps may be performed in a second execution cycle (e.g., one minute) shorter than the first execution cycle.

In this case, after calculation of principal components through principal component analysis and setting of a threshold are executed once, calculation of abnormality degrees and determination for whether or not an abnormality has occurred are performed at each time (every one minute which is the second execution cycle) until the next execution timing (after 24 hours corresponding to the first execution cycle). Thus, by making execution cycles different in accordance with processing contents, the calculation amount in the abnormality detection step is reduced, whereby the speed of analysis by MSPC can be increased.

As a result of the above abnormality detection step, if it is determined that "there is an abnormality", the process proceeds to step ST105, and if it is determined that "there is no abnormality", the process proceeds to step ST107 (step ST104).

If it is determined that "there is an abnormality" in the abnormality detection step, a contribution degree of each measurement value is calculated for the occurring abnormality, to obtain contribution degree data Cp (step ST105: contribution factor calculation step). The "contribution degree" is as described above, and is the degree of an influence that each measurement value causes to variation in the abnormality degree WD.

In the contribution factor calculation step, the cause possibility factor p* which is a factor p exhibiting a great contribution degree is specified. The method for specifying the cause possibility factor p* is as described above. For each of the $T^2$ value and the Q value, contribution degrees of factors p are calculated, and then the factor p ranked high in the order of the magnitudes of the contribution degrees is specified as a cause possibility factor p*.

Next, on the basis of the abnormality presence/absence determination result W and the determination clustering information CLM, the abnormality mode of the abnormality when the abnormality has occurred is determined, to obtain an abnormality mode determination result M (step ST106: abnormality mode determination step). As described above, in Embodiment 1, abnormality mode determination is performed using the determination clustering map shown in FIG. 3. The specific determination method is as described above. In addition, as described above, narrowing down of abnormality modes based on contribution degrees may be performed before determination in the abnormality mode determination step. In a case of performing narrowing down based on contribution degrees, the narrowing down is performed between step ST105 and step ST106.

Next, in accordance with the contents of the abnormality presence/absence determination result W, the abnormality mode determination result M, and the like, whether or not an abnormality has occurred, the abnormality mode of the occurring abnormality, and the severity thereof are displayed (step ST107: diagnosis result display step). In the diagnosis result display step, an alert for the abnormality, the abnormality degree, the contribution degree, the cause possibility factor, and the like may be displayed as described above.

Next, the determination clustering information CLM is updated as necessary (step ST108: determination information update step). Update of the determination clustering information CLM is as described above. In FIG. 6, the determination information update step is performed after the diagnosis result display step. However, the order of the two steps may be reversed, or the two steps may be performed simultaneously.

According to Embodiment 1, it is possible to detect occurrence of an abnormality in the water treatment process and perform diagnosis for the severity of the detected abnormality. Specifically, the abnormality diagnosis system includes: a measurement value collection unit which collects a plurality of kinds of measurement values in a water treatment process performed by the water treatment plant; a measurement value storage unit in which the measurement values collected by the measurement value collection unit are accumulated; an abnormality detection unit which determines whether or not an abnormality has occurred in the water treatment plant, on the basis of an abnormality degree calculated from the measurement values; a determination information storage unit which stores determination clustering information indicating a relationship between the abnormality degree and an abnormality mode; an abnormality mode determination unit which, in a case where it is determined that the abnormality has occurred, compares the abnormality degree calculated by the abnormality detection unit with the determination clustering information, to determine the abnormality mode of the occurring abnormality; and a diagnosis result display unit which displays a result of the determination of the abnormality mode. The abnormality mode is associated with a severity for the water treatment plant.

When it is determined that an abnormality has occurred, the abnormality degree calculated by the abnormality detection unit is compared with the determination clustering information, to determine the abnormality mode of the occurring abnormality, and the abnormality mode is associated with the severity for the water treatment plant. With determination for the abnormality mode, the severity which is the magnitude of an adverse effect caused to the water treatment plant by the occurring abnormality is also diagnosed.

In addition, a user who is notified of abnormality detection via display of a diagnosis result by the diagnosis result display unit can recognize the severity of the occurring abnormality, and thereby can swiftly determine whether or not the user should preferentially cope with the abnormality. Thus, maintenance and management of the water treatment plant can be made efficient.

Embodiment 2

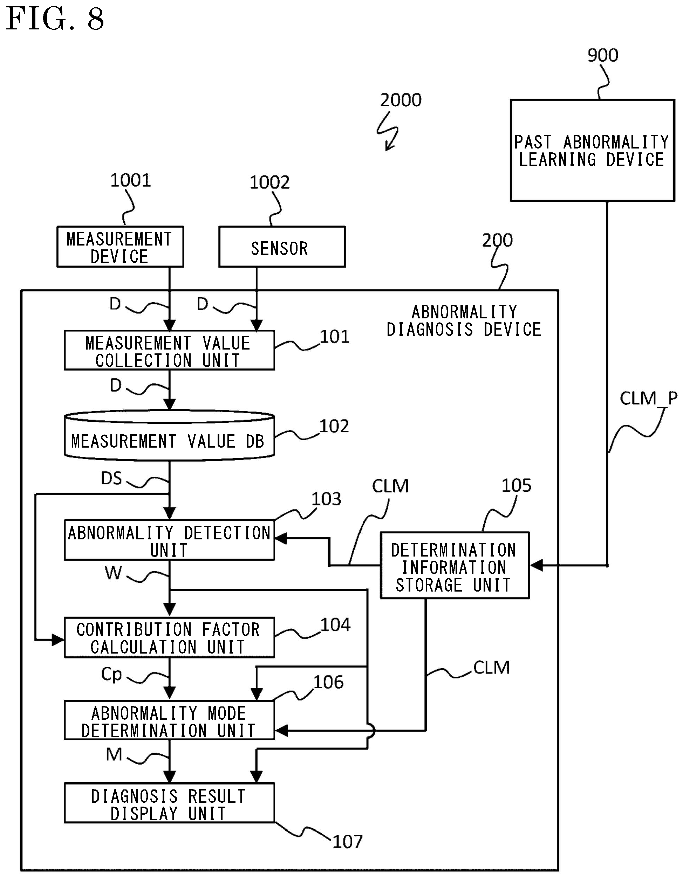

Next, Embodiment 2 will be described with reference to FIG. 8 to FIG. 11. Components that are the same as or correspond to those shown in FIG. 1 to FIG. 7 are denoted by the same reference characters and the description thereof is omitted. Embodiment 2 is different from Embodiment 1 in that determination clustering information is generated through machine learning before actual operation is started. FIG. 8 is a block diagram showing a configuration of an abnormality diagnosis system for a water treatment plant according to Embodiment 2. An abnormality diagnosis system 2000 includes the same abnormality diagnosis device 100 as in Embodiment 1, and a past abnormality learning device 900 connected to the abnormality diagnosis device 200 via a network.

The past abnormality learning device 900 generates determination clustering information CLM_P from information about past abnormalities, and transmits the generated determination clustering information CLM_P to the determination information storage unit 105 of the abnormality diagnosis device 200. The determination information storage unit 105 stores the determination clustering information CLM_P acquired from the past abnormality learning device 900. In actual operation, the determination clustering information CLM_P is used as the determination clustering information CLM for abnormality mode determination.

The abnormality diagnosis device 200 basically has the same configuration as the abnormality diagnosis device 100 in Embodiment 1, but is different from the abnormality diagnosis device 100 in that the determination information generation unit 108 is not provided. That is, in Embodiment 2, generation and update of the determination clustering information CLM in actual operation need not be performed. In addition, Embodiment 2 is different from Embodiment 1 also in that the determination clustering information CLM is sent to the abnormality detection unit 103. To be strict, the determination clustering information CLM is sent to a threshold setting unit 1035 of the abnormality detection unit 103.

The determination clustering information CLM in Embodiment 2 is the determination clustering information CLM_P based on past data, and includes information about clusters corresponding to various abnormalities that occurred in the past. Therefore, it is possible to set the threshold Th correspondingly to each cluster. In other words, it is possible to set the threshold Th correspondingly to each abnormality. Thus, more accurate abnormality detection can be performed. In addition, since the threshold Th can be set on the basis of the already generated determination clustering information CLM, it is not necessary to calculate the value of "m + 3$\sigma$" for each of the $T^2$ value and the Q value as in Embodiment 1. Thus, the calculation load in abnormality detection can be reduced.

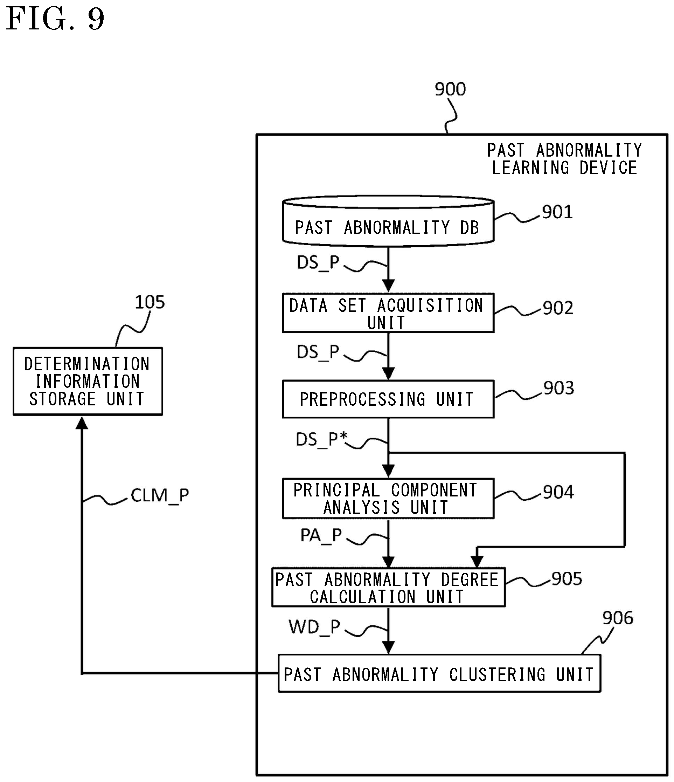

The past abnormality learning device 900 applies a method of MSPC to data obtained when abnormalities occurred in the past, to calculate abnormality degrees ($T^2$ values and Q values), and applies a method of machine learning to the calculated abnormality degrees, to generate the determination clustering information CLM. FIG. 9 is a block diagram showing a configuration of the past abnormality learning device according to Embodiment 2. The past abnormality learning device 900 includes: a past abnormality DB 901, i.e., a past abnormality storage unit, in which data when abnormalities occurred in the past are accumulated; a data set acquisition unit 902 which acquires a data set DS_P from the past abnormality DB 901; a preprocessing unit 903 which performs preprocessing on the data set DS_P and outputs the resultant data as a preprocessed data set DS_P*; a principal component analysis unit 904 which performs PCA analysis on the preprocessed data set DS_P*, to generate principal component axis information PA_P; a past abnormality degree calculation unit 905 which calculates a past abnormality degree WD_P, using the principal component axis information PA_P and the preprocessed data set DS_P*; and a past abnormality clustering unit 906 which performs clustering through machine learning, for the past abnormality degree WD_P, to associate the past abnormality degree WD_P and the abnormality mode with each other so as to generate determination clustering information CLM_P.

In the past abnormality DB 901, various measurement value data D_P (not shown) when abnormalities occurred in the past are accumulated. In addition, in the past abnormality DB 901, the accumulated measurement value data D_P are respectively associated with the abnormality modes of the abnormalities that occurred. In other words, the measurement value data D_P accumulated in the past abnormality DB 901 are respectively labeled with the abnormality modes.

Among the measurement value data D_P accumulated in the past abnormality DB 901, the data set acquisition unit 902 acquires, for example, a combination of the same series of measurement value data D_P (a combination of measurement value data D_P of which the measurement times are the same), as one data set DS_P. Since the measurement value data D_P composing the data set DS_P are labeled with abnormality modes, the data set DS_P is also labeled with abnormality modes.

The preprocessing unit 903 acquires the data set DS_P from the data set acquisition unit 902, and performs preprocessing on the data set DS_P. The content of the preprocessing is the same as in Embodiment 1. The preprocessing unit 903 outputs the preprocessed data set DS_P* that has undergone the preprocessing, to the principal component analysis unit 904 and the past abnormality degree calculation unit 905.

The principal component analysis unit 904 performs PCA analysis on the data set DS_P*. The PCA analysis is the same as in Embodiment 1, and a first principal component axis and a second principal component axis are determined from the plurality of measurement value data D_P composing the data set DS_P*. The principal component analysis unit 904 outputs information about the principal component axes as principal component axis information PA_P.

The past abnormality degree calculation unit 905 acquires the principal component axis information PA_P from the principal component analysis unit 904, acquires the data set DS_P* as a target of abnormality detection from the preprocessing unit 903, and calculates the past abnormality degree WD_P using the principal component axis information PA_P and the data set DS_P*. In calculation of the "past abnormality degree" in Embodiment 2, for the measurement value data D_P, i.e., measurement value data when abnormalities occurred in the past, the $T^2$ value and the Q value are calculated in the same manner as in calculation of the "abnormality degree" in Embodiment 1.

The past abnormality degree calculation unit 905 outputs data of the calculated past abnormality degree ($T^2$ value and Q value) as the past abnormality degree WD_P to the past abnormality clustering unit 906. As is found from the fact that the past abnormality degree WD_P is calculated from the measurement value data D_P (the original data of the past abnormality degree WD_P is the measurement value data D_P), the past abnormality degree WD_P is also associated with the abnormality mode.

The past abnormality clustering unit 906 acquires the past abnormality degree WD_P from the past abnormality degree calculation unit 905, and using the past abnormality degree WD_P as an input, performs machine learning, e.g., unsupervised learning such as a k-means method or supervised learning such as decision tree analysis, to perform clustering for a relationship between an abnormality mode, and the $T^2$ value and the Q value when an abnormality occurred in the past, i.e., the past abnormality degree WD_P, thus generating the determination clustering information CLM_P. The past abnormality clustering unit 906 transmits the generated determination clustering information CLM_P to the determination information storage unit 105 of the abnormality diagnosis device 200. The abnormality mode associated with the past abnormality degree WD_P in generation of the determination clustering information CLM_P is the abnormality mode of the abnormality that occurred in the past, and the severity thereof is already known. That is, in generation of the determination clustering information CLM_P, the past abnormality degrees WD_P are sequentially associated with the past abnormalities which are already known (the severities thereof are already known).

Using the same method as that described in Embodiment 1, contribution degrees regarding data when abnormalities occurred in the past may be calculated, and the calculated contribution degrees may be associated with the abnormality modes. Information about the association between the abnormality modes and the contribution degrees regarding data when abnormalities occurred in the past is added to the determination clustering information CLM_P.

A hardware configuration of the past abnormality learning device 900 is the same as that of the abnormality diagnosis device 100.

Various kinds of measurement values in the water treatment plant often have a day-by-day or season-by-season periodicity. Therefore, in a case of generating the determination clustering information CLM_P using data when abnormalities occurred in the past, the determination clustering information CLM_P is generated using data for the same time period in a day or for the same season in a year, whereby accuracy of abnormality detection and abnormality mode determination in actual operation is improved. For example, in a case where abnormality detection and abnormality mode determination in actual operation are performed in spring, it is desirable that the determination clustering information CLM_P is generated using data when abnormalities occurred in spring one year ago, etc.

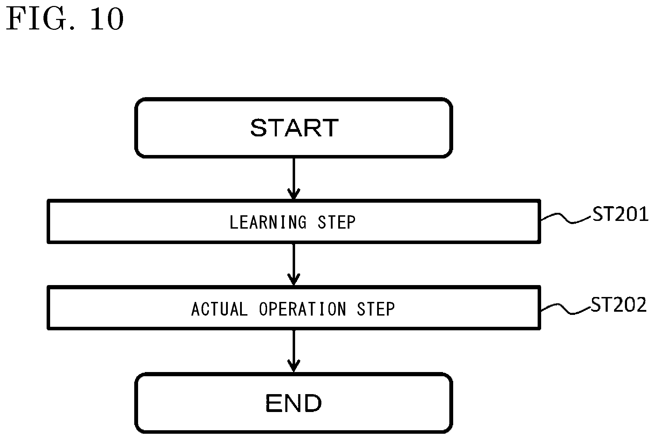

Next, operation will be described. FIG. 10 is a flowchart showing operation of the abnormality diagnosis system for the water treatment plant according to Embodiment 2. First, through machine learning using data when abnormalities occurred in the past, determination clustering information CLM_P is generated (step ST201: learning step). Next, using the determination clustering information CLM_P generated in the learning step, an abnormality occurring in the water treatment plant which is a monitoring target is detected, and the abnormality mode of the occurring abnormality is determined (step ST202: actual operation step).

In the actual operation step, the determination clustering information CLM_P generated in the learning step is used as the determination clustering information CLM, to execute determination for the abnormality mode. In the actual operation step, the determination clustering information CLM need not be updated. Therefore, the actual operation step is different only in that the determination information update step in step ST108 is absent, and except for this, the actual operation step is the same as the flow shown in Embodiment 1 (FIG. 6).

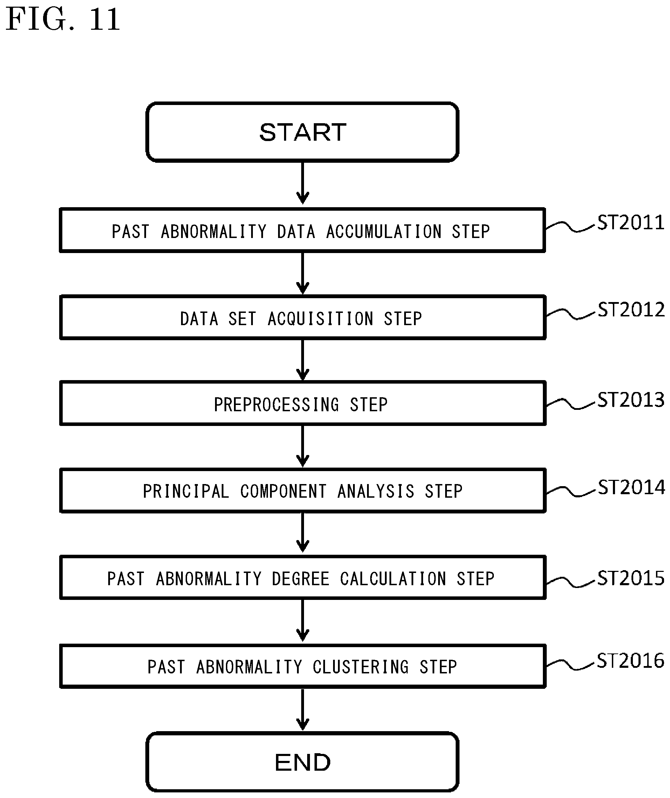

The learning step will be described. FIG. 11 is a flowchart showing the learning step according to Embodiment 2. In the learning step, the determination clustering information CLM_P is generated using the method of MSPC described in Embodiment 1 and machine learning. First, data when abnormalities occurred in the past are accumulated (step ST2011: past abnormality data accumulation step). Next, from the data when abnormalities occurred in the past, a combination of the same series of measurement value data D_P, or the like is acquired as one data set DS_P (step ST2012: data set acquisition step), and preprocessing is performed on the data set DS_P, to obtain a preprocessed data set DS_P* (step ST2013: preprocessing step). The preprocessing for the data set DS_P is as described above.

Next, PCA analysis is performed on the data set DS_P* (step ST2014: principal component analysis step). The PCA analysis is as described above, and regarding data when abnormalities occurred in the past, principal component axis information PA_P which is information about each principal component axis is obtained.

Next, past abnormality degrees are calculated using the principal component axis information PA_P and the data set DS_P* which is the original data for calculating past abnormality degrees (step ST2015: past abnormality degree calculation step). The past abnormality degree is as described above. In Embodiment 2, for data when abnormalities occurred in the past, the $T^2$ values and the Q values are calculated, and data of the calculated $T^2$ values and Q values are used as the past abnormality degrees WD_P.

Next, on the basis of the past abnormality degrees WD_P, data when abnormalities occurred in the past are classified by a method of clustering, to generate determination clustering information CLM_P (step ST2016: past abnormality clustering step). The clustering in the past abnormality clustering step is as described above, and by performing machine learning, e.g., unsupervised learning such as a k-means method or supervised learning such as decision tree analysis, a relationship between the past abnormality degrees WD_P ($T^2$ values and Q values) and the abnormality modes is clustered, to generate the determination clustering information CLM_P.

According to Embodiment 2, the same effects as in Embodiment 1 can be obtained.

In addition, the calculation load in actual operation can be reduced, and abnormality detection and abnormality mode determination can be performed more quickly. Specifically, a past abnormality DB for accumulating data of measurement values when abnormalities occurred in the past is provided, and in a learning step before an actual operation step, determination clustering information is generated using the data of the measurement values when the abnormalities occurred in the past. In actual operation, abnormality mode determination may be performed using the already generated determination clustering information. That is, it is not necessary to perform calculation for generating and updating determination clustering information as in Embodiment 1.

Therefore, the calculation amount in abnormality mode determination in actual operation is reduced. A configuration having an advanced calculation function is needed for generation and update of the determination clustering information, but in Embodiment 2, such a configuration can be omitted from the abnormality diagnosis device. In addition, since the threshold for abnormality detection is set on the basis of the already generated determination clustering information, more accurate abnormality detection can be achieved and the calculation load in abnormality detection in actual operation can be reduced.

In addition, if determination clustering information is generated using past data having a high autocorrelation, accuracy of abnormality mode determination can be improved.


Embodiment 3

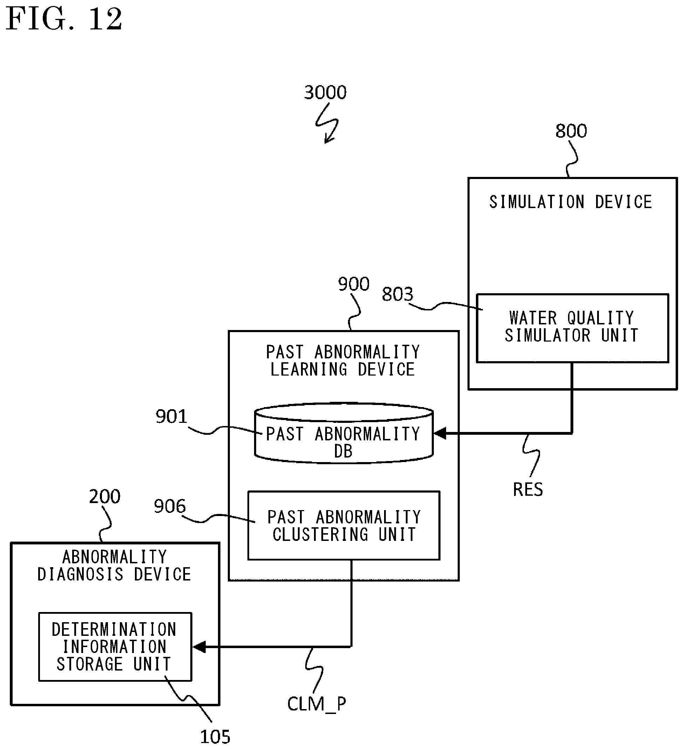

Next, Embodiment 3 will be described with reference to FIG. 12 to FIG. 15. Components that are the same as or correspond to those shown in FIG. 1 to FIG. 11 are denoted by the same reference characters and the description thereof is omitted. In Embodiment 3, not only data when abnormalities occurred in the past but also a result of simulation by a water quality simulator is used in generation of the determination clustering information CLM_P in Embodiment 2. FIG. 12 is a block diagram showing a configuration of an abnormality diagnosis system for a water treatment plant according to Embodiment 3.

An abnormality diagnosis system 3000 includes the same abnormality diagnosis device 200 and the same past abnormality learning device 900 as in Embodiment 2, and a simulation device 800 connected to the past abnormality learning device 900 via the network. The simulation device 800 transmits a simulation result RES of a water quality simulator which virtually reproduces an abnormality, to the past abnormality DB 901 of the past abnormality learning device 900. In the past abnormality DB 901, the simulation result RES is accumulated as with the measurement value data D_P which is data when an abnormality occurred in the past. In the past abnormality learning device 900, the simulation result RES is treated in the same manner as with the measurement value data D_P.

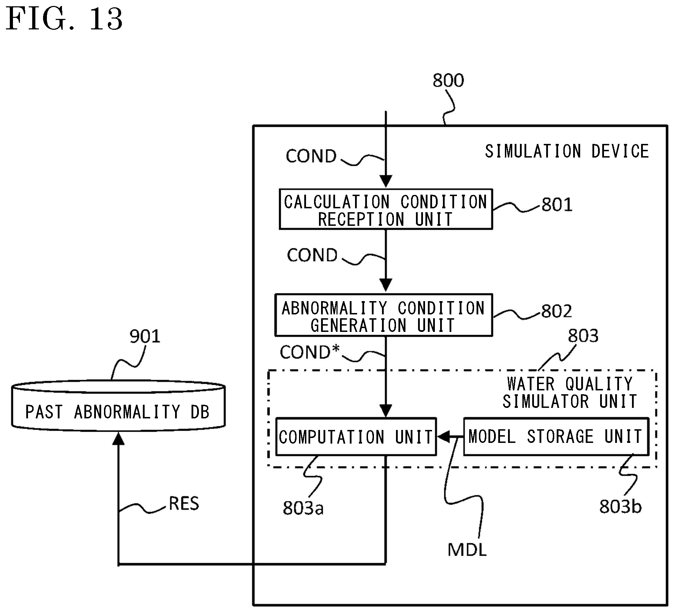

FIG. 13 is a block diagram showing a configuration of the simulation device according to Embodiment 3. The simulation device 800 includes a calculation condition reception unit 801 which receives an input of a calculation condition COND in water quality simulation, an abnormality condition generation unit 802 which generates an abnormality condition COND* for virtually reproducing an abnormality on the basis of the calculation condition COND, and a water quality simulator unit 803 which performs water quality simulation using the abnormality condition COND* as an input, and outputs a simulation result RES.

The calculation condition reception unit 801 is an interface that receives a calculation condition COND inputted by a user, and outputs the received calculation condition COND to the abnormality condition generation unit 802. The calculation condition COND includes conditions such as an inflow water quality condition and an operation condition for a process regarding an abnormality to be reproduced.

The abnormality condition generation unit 802 generates an abnormality condition COND* for virtually reproducing an abnormality in water quality simulation on the basis of the calculation condition COND inputted by a user. The abnormality condition generation unit 802 outputs the abnormality condition COND* to a computation unit 803a of the water quality simulator unit 803.

The water quality simulator unit 803 includes the computation unit 803a which executes calculation involved in simulation, and a model storage unit 803b which stores various simulation models MDL needed for a water quality simulator. In water quality simulation performed by the water quality simulator unit 803, the simulation model MDL to be used in water quality simulation is read from the model storage unit 803b to the computation unit 803a, and processing such as calculating progress over time from the initial condition is performed on the basis of the read simulation model MDL and the abnormality condition COND*, thus executing simulation and generating a simulation result RES.

The water quality simulator unit 803 transmits the simulation result RES to the past abnormality DB 901 of the past abnormality learning device 900. Examples of the simulation models MDL include various physics reaction models such as a microorganism reaction activation model. In a case where the model storage unit 803b stores a plurality of simulation models MDL, the simulation model MDL to be used in water quality simulation may be specified on the basis of the calculation condition COND.

An abnormality to be reproduced by the water quality simulator unit 803 is an abnormality that can occur on a condition specified by the calculation condition COND. Since the calculation condition COND can be arbitrarily specified by a user, the water quality simulator unit 803 can reproduce an abnormality that has not actually occurred in the past. That is, the water quality simulator unit 803 virtually reproduces an abnormality that actually occurred or an abnormality that can occur.

An abnormality is reproduced by the simulation device 800, and data of the reproduced abnormality is also used in machine learning in the past abnormality learning device 900. Thus, even in a case where data to be used in machine learning in the past abnormality learning device 900 is insufficient because, for example, the amount of data when abnormalities actually occurred in the past is small, a data size needed for machine learning can be ensured, whereby the determination clustering information CLM_P can be accurately generated.

In addition, since abnormalities that have not actually occurred in the past are reproduced, a limitation regarding whether or not such abnormalities are the ones that actually occurred is eliminated. Therefore, abnormalities that have not actually occurred but can occur, can also be reflected in the determination clustering information CLM_P, whereby the range of abnormality modes that can be determined can be expanded. Thus, the range of application of the abnormality diagnosis system can be expanded.

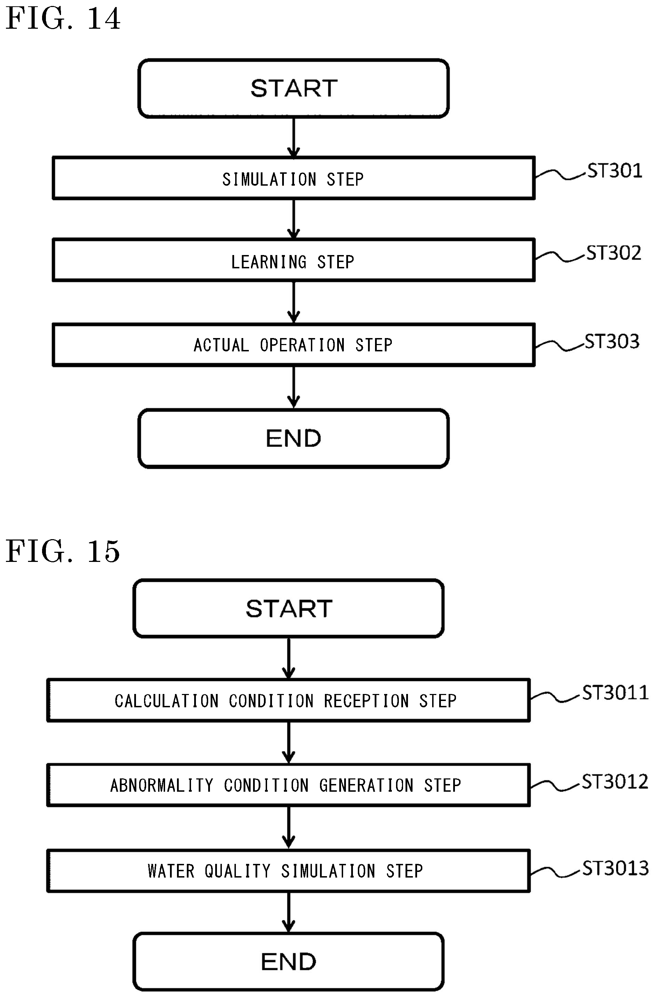

Next, operation will be described. FIG. 14 is a flowchart showing operation of the abnormality diagnosis system for the water treatment plant according to Embodiment 3. First, water quality simulation by the water quality simulator is performed, to obtain a simulation result RES (step ST301: simulation step). Next, the determination clustering information CLM_P is generated through machine learning using the simulation result RES and data when abnormalities occurred in the past (step ST302: learning step).

Next, using the determination clustering information CLM_P generated in the learning step, an abnormality generated in the water treatment plant which is a monitoring target is detected, and the abnormality mode of the occurring abnormality is determined (step ST303: actual operation step). The details of the learning step and the actual operation step are the same as in Embodiment 2. In the learning step, the simulation result RES acquired in the simulation step is used in machine learning as with data when abnormalities occurred in the past.

The simulation step will be described. FIG. 15 is a flowchart showing the simulation step according to Embodiment 3. First, a calculation condition COND inputted by a user is received (step ST3011: calculation condition reception step). As described above, the calculation condition COND includes conditions such as an inflow water quality condition and an operation condition for a process regarding an abnormality to be reproduced.

Next, on the basis of the calculation condition COND, an abnormality condition COND* for virtually reproducing an abnormality in water quality simulation is generated (step ST3012: abnormality condition generation step).

Next, water quality simulation is executed on the basis of the abnormality condition COND* and the simulation model MDL, to acquire a simulation result RES (step ST3013: water quality simulation step). The simulation model MDL is as described above. The simulation result RES is stored into the past abnormality DB 901.

In Embodiment 3, the simulation result RES generated by the simulation device 800 is accumulated into the past abnormality DB 901 once. However, it suffices that a result of water quality simulation by the water quality simulator unit 803 is reflected in generation of the determination clustering information CLM_P. Therefore, accumulation of the simulation result RES into the past abnormality DB 901 is not essential, and it suffices that at least the simulation result RES is reflected in calculation of the past abnormality degree WD_P. For example, the simulation result RES may be directly sent from the simulation device 800 to the data set acquisition unit 902.

According to Embodiment 3, the same effects as in Embodiment 2 can be obtained.

In addition, a water quality simulator unit which virtually reproduces an abnormality that actually occurred or an abnormality that can occur is further provided, and in generation of determination clustering information, data when an abnormality occurred in the past and data when the abnormality virtually reproduced by the water quality simulator unit occurs are used. Therefore, even in a case where data when abnormalities occurred in the past is insufficient, determination clustering information can be accurately generated. In addition, since an abnormality that has not actually occurred can be reproduced, the range of abnormality modes that can be determined can be expanded, whereby the range of application of the abnormality diagnosis system can be expanded.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

**DESCRIPTION OF THE REFERENCE CHARACTERS**

100, 200 abnormality diagnosis device
101 measurement value collection unit
102 measurement value DB
103 abnormality detection unit
1034 abnormality degree calculation unit
104 contribution factor calculation unit
105 determination information storage unit
106 abnormality mode determination unit
107 diagnosis result display unit
108 determination information generation unit
800 simulation device
803 water quality simulator unit
900 past abnormality learning device
901 past abnormality DB
905 past abnormality degree calculation unit
906 past abnormality clustering unit
1000, 2000, 3000 abnormality diagnosis system
CLM, CLM_P determination clustering information
Cp contribution degree data
D, D_P measurement value data
M abnormality mode determination result
W abnormality presence/absence determination result
WD abnormality degree
WD_P past abnormality degree

**Claims**

1. An abnormality diagnosis system for a water treatment plant, which performs diagnosis for an abnormality of the water treatment plant which is a monitoring target, the abnormality diagnosis system comprising:

a measurement value collection unit which collects a plurality of kinds of measurement values in a water treatment process performed by the water treatment plant;
a measurement value storage unit in which the measurement values collected by the measurement value collection unit are accumulated;
an abnormality detection unit which determines whether or not an abnormality has occurred in the water treatment plant, on the basis of an abnormality degree calculated from the measurement values;
an abnormality mode determination information storage unit which stores abnormality mode determination information indicating a relationship between the abnormality degree and an abnormality mode;
an abnormality mode determination unit which, in a case where it is determined that the abnormality has occurred, compares the abnormality degree calculated by the abnormality detection unit with the abnormality mode determination information, to determine the abnormality mode of the occurring abnormality; and
a diagnosis result display unit which displays a result of the determination, wherein
the abnormality mode is associated with a severity for the water treatment plant.

2. The abnormality diagnosis system for the water treatment plant according to claim 1, further comprising a contribution factor calculation unit which calculates, for each of the measurement values, a contribution degree indicating a degree of an influence caused to variation in the abnormality degree, wherein
the abnormality mode determination unit narrows down the abnormality modes on the basis of the contribution degrees, before the determination based on comparison between the abnormality degree and the abnormality mode determination information.

3. The abnormality diagnosis system for the water treatment plant according to claim 2, wherein

the contribution factor calculation unit specifies, as a cause possibility factor, the measurement value ranked high in an order of magnitudes of the contribution degrees, and
the abnormality mode determination unit narrows down the abnormality modes on the basis of the contribution degrees and the cause possibility factor.

4. The abnormality diagnosis system for the water treatment plant according to any one of claims 1 to 3, further comprising a determination information generation unit which generates and updates the abnormality mode determination information on the basis of a relationship between the abnormality degree acquired in actual operation and the severity of the abnormality having the acquired abnormality degree.

5. The abnormality diagnosis system for the water treatment plant according to any one of claims 1 to 3, further comprising:

a past abnormality storage unit in which data of the measurement values when abnormalities occurred in past are accumulated;
a past abnormality degree calculation unit which calculates the abnormality degree as a past abnormality degree from the measurement values accumulated in the past abnormality storage unit; and
a past abnormality clustering unit which performs clustering through machine learning for the past abnormality degree, to associate the past abnormality degree and the abnormality mode with each other, thus generating determination clustering information, wherein
the abnormality mode determination unit determines the abnormality mode of the abnormality occurring at present, using the determination clustering information generated in advance, as the abnormality mode determination information.

6. The abnormality diagnosis system for the water treatment plant according to claim 5, further comprising a water quality simulator unit which virtually reproduces an abnormality that actually occurred or an abnormality that can occur, wherein
the past abnormality degree calculation unit calculates the past abnormality degree using data of the abnormality virtually reproduced by the water quality simulator unit and the measurement values accumulated in the past abnormality storage unit.

7. The abnormality diagnosis system for the water treatment plant according to claim 5 or 6, wherein
in generation of the determination clustering information, the measurement values when the abnormalities occurred in the past, of which a time in a day or a season in a year is the same as a time or a season at present, are used.

8. An abnormality diagnosis method for a water treatment plant, which performs diagnosis for an abnormality of the water treatment plant which is a monitoring target, the abnormality diagnosis method comprising:

a measurement value collection step of collecting a plurality of kinds of measurement values in a water treatment process performed by the water treatment plant;
a measurement value accumulation step of accumulating the measurement values collected in the measurement value collection step;
an abnormality detection step of determining whether or not an abnormality has occurred in the water treatment plant, on the basis of an abnormality degree calculated from the measurement values;
an abnormality mode determination step of, in a case where it is determined that the abnormality has occurred, comparing the abnormality degree calculated in the abnormality detection step with abnormality mode determination information indicating a relationship between the abnormality degree and an abnormality mode, to determine the abnormality mode of the occurring abnormality; and

a diagnosis result display step of displaying a result of the determination, wherein the abnormality mode is associated with a severity for the water treatment plant.

9. The abnormality diagnosis method for the water treatment plant according to claim 8, further comprising a contribution factor calculation step of calculating, for each of the measurement values, a contribution degree indicating a degree of an influence caused to variation in the abnormality degree, wherein

in the abnormality mode determination step, the abnormality modes are narrowed down on the basis of the contribution degrees, before the determination based on comparison between the abnormality degree and the abnormality mode determination information.

10. The abnormality diagnosis method for the water treatment plant according to claim 9, wherein

in the contribution factor calculation step, the measurement value ranked high in an order of magnitudes of the contribution degrees is specified as a cause possibility factor, and

in the abnormality mode determination step, the abnormality modes are narrowed down on the basis of the contribution degrees and the cause possibility factor.

11. The abnormality diagnosis method for the water treatment plant according to any one of claims 8 to 10, further comprising generating and updating the abnormality mode determination information on the basis of a relationship between the abnormality degree acquired in actual operation and the severity of the abnormality having the acquired abnormality degree.

12. The abnormality diagnosis method for the water treatment plant according to any one of claims 8 to 10, further comprising:

a past abnormality data accumulation step of accumulating data of the measurement values when abnormalities occurred in past;

a past abnormality degree calculation step of calculating the abnormality degree as a past abnormality degree from the measurement values accumulated in the past abnormality data accumulation step; and

a past abnormality clustering step of performing clustering through machine learning for the past abnormality degree, to associate the past abnormality degree and the abnormality mode with each other, thus generating determination clustering information, wherein

in the abnormality mode determination step, the abnormality mode of the abnormality occurring at present is determined, using the determination clustering information generated in advance, as the abnormality mode determination information.

13. The abnormality diagnosis method for the water treatment plant according to claim 12, further comprising a water quality simulation step of virtually reproducing an abnormality that actually occurred or an abnormality that can occur, wherein

in the past abnormality degree calculation step, the past abnormality degree is calculated using a simulation result of the water quality simulation step and the measurement values accumulated in the past abnormality data accumulation step.

14. The abnormality diagnosis method for the water treatment plant according to claim 12 or 13, wherein in generation of the determination clustering information, the measurement values when the abnormalities occurred in the past, of which a time in a day or a season in a year is the same as a time or a season at present, are used.

# FIG. 1

# FIG. 2

MEASUREMENT VALUE DB — 102

103

DS

ABNORMALITY
DETECTION UNIT

DATA SET ACQUISITION
UNIT — 1031

DS

PREPROCESSING UNIT — 1032

DS*

PRINCIPAL COMPONENT
ANALYSIS UNIT — 1033

PA

ABNORMALITY DEGREE
CALCULATION UNIT — 1034

1035

WD

THRESHOLD SETTING UNIT — 1035

Th

ABNORMALITY OCCURRENCE
DETERMINATION UNIT — 1036

W

FIG. 3

FIG. 4

| ABNORMALITY MODE | SEVERITY |
|---|---|
| MODE 1 | GREAT |
| MODE 2 | SMALL |
| MODE 3 | MIDDLE |

FIG. 5

## FIG. 6

```
                    ┌─────────────────────────┐
                    │         START           │
                    └─────────────────────────┘
                                 │
                                 ▼
        ┌──────────────────────────────────────────┐
        │   MEASUREMENT VALUE COLLECTION STEP        │──── ST101
        └──────────────────────────────────────────┘
                                 │
                                 ▼
        ┌──────────────────────────────────────────┐
        │   MEASUREMENT VALUE ACCUMULATION STEP      │──── ST102
        └──────────────────────────────────────────┘
                                 │
                                 ▼
        ┌──────────────────────────────────────────┐
        │      ABNORMALITY DETECTION STEP            │──── ST103
        └──────────────────────────────────────────┘
                                 │
                                 ▼                        ST104
                    ◇─────────────────────◇
                    │  IS THERE ABNORMALITY? │──── NO ──┐
                    ◇─────────────────────◇             │
                                 │ YES                   │
                                 ▼              ST105     │
        ┌──────────────────────────────────────────┐     │
        │   CONTRIBUTION FACTOR CALCULATION STEP     │     │
        └──────────────────────────────────────────┘     │
                                 │              ST106     │
                                 ▼                        │
        ┌──────────────────────────────────────────┐     │
        │    ABNORMALITY MODE DETERMINATION STEP     │     │
        └──────────────────────────────────────────┘     │
                                 │◄───────────────────────┘
                                 ▼
        ┌──────────────────────────────────────────┐
        │      DIAGNOSIS RESULT DISPLAY STEP         │──── ST107
        └──────────────────────────────────────────┘
                                 │
                                 ▼
        ┌──────────────────────────────────────────┐
        │   DETERMINATION INFORMATION UPDATE STEP    │──── ST108
        └──────────────────────────────────────────┘
                                 │
                                 ▼
                    ┌─────────────────────────┐
                    │          END            │
                    └─────────────────────────┘
```

# FIG. 7

```
                    ┌─────────────────────┐
                    │       START         │
                    └─────────────────────┘
                              │
                              ▼
        ┌─────────────────────────────────────────┐
        │      DATA SET ACQUISITION STEP          │ ──⌇ ST1031
        └─────────────────────────────────────────┘
                              │
                              ▼
        ┌─────────────────────────────────────────┐
        │           PREPROCESSING STEP            │ ──⌇ ST1032
        └─────────────────────────────────────────┘
                              │
                              ▼
        ┌─────────────────────────────────────────┐
        │     PRINCIPAL COMPONENT ANALYSIS STEP   │ ──⌇ ST1033
        └─────────────────────────────────────────┘
                              │
                              ▼
        ┌─────────────────────────────────────────┐
        │    ABNORMALITY DEGREE CALCULATION STEP  │ ──⌇ ST1034
        └─────────────────────────────────────────┘
                              │
                              ▼
        ┌─────────────────────────────────────────┐
        │         THRESHOLD SETTING STEP          │ ──⌇ ST1035
        └─────────────────────────────────────────┘
                              │
                              ▼
        ┌─────────────────────────────────────────┐
        │ ABNORMALITY OCCURRENCE DETERMINATION STEP│ ──⌇ ST1036
        └─────────────────────────────────────────┘
                              │
                              ▼
                    ┌─────────────────────┐
                    │        END          │
                    └─────────────────────┘
```

FIG. 8

# FIG. 9

900

**PAST ABNORMALITY LEARNING DEVICE**

PAST ABNORMALITY DB — 901

DS_P

DATA SET ACQUISITION UNIT — 902

DS_P

PREPROCESSING UNIT — 903

DS_P*

PRINCIPAL COMPONENT ANALYSIS UNIT — 904

PA_P

PAST ABNORMALITY DEGREE CALCULATION UNIT — 905

WD_P

PAST ABNORMALITY CLUSTERING UNIT — 906

105

DETERMINATION INFORMATION STORAGE UNIT

CLM_P

FIG. 10

```
                    ┌─────────────────────────────┐
                    │           START             │
                    └─────────────────────────────┘
                                   │
                                   ▼
        ┌───────────────────────────────────────────────┐
        │              LEARNING STEP                     │───ST201
        └───────────────────────────────────────────────┘
                                   │
                                   ▼
        ┌───────────────────────────────────────────────┐
        │           ACTUAL OPERATION STEP                │───ST202
        └───────────────────────────────────────────────┘
                                   │
                                   ▼
                    ┌─────────────────────────────┐
                    │            END              │
                    └─────────────────────────────┘
```

## FIG. 11

```
                    ┌─────────────────────────────┐
                    │           START             │
                    └─────────────────────────────┘
                                  │
                                  ▼
        ┌──────────────────────────────────────────────┐
        │ PAST ABNORMALITY DATA ACCUMULATION STEP       │──── ST2011
        └──────────────────────────────────────────────┘
                                  │
                                  ▼
        ┌──────────────────────────────────────────────┐
        │          DATA SET ACQUISITION STEP            │──── ST2012
        └──────────────────────────────────────────────┘
                                  │
                                  ▼
        ┌──────────────────────────────────────────────┐
        │             PREPROCESSING STEP                │──── ST2013
        └──────────────────────────────────────────────┘
                                  │
                                  ▼
        ┌──────────────────────────────────────────────┐
        │      PRINCIPAL COMPONENT ANALYSIS STEP        │──── ST2014
        └──────────────────────────────────────────────┘
                                  │
                                  ▼
        ┌──────────────────────────────────────────────┐
        │   PAST ABNORMALITY DEGREE CALCULATION STEP    │──── ST2015
        └──────────────────────────────────────────────┘
                                  │
                                  ▼
        ┌──────────────────────────────────────────────┐
        │       PAST ABNORMALITY CLUSTERING STEP        │──── ST2016
        └──────────────────────────────────────────────┘
                                  │
                                  ▼
                    ┌─────────────────────────────┐
                    │            END              │
                    └─────────────────────────────┘
```

# FIG. 12

3000

800

SIMULATION DEVICE

900 803

WATER QUALITY
SIMULATOR UNIT

PAST ABNORMALITY
LEARNING DEVICE

901

PAST ABNORMALITY
DB

RES

200 906

PAST ABNORMALITY
CLUSTERING UNIT

ABNORMALITY
DIAGNOSIS DEVICE

DETERMINATION
INFORMATION
STORAGE UNIT

CLM_P

105

FIG. 13

FIG. 14

```
                    ┌─────────────────────────┐
                    │          START          │
                    └─────────────────────────┘
                                 │
                                 ▼
        ┌─────────────────────────────────────────────┐
        │             SIMULATION STEP                  │──── ST301
        └─────────────────────────────────────────────┘
                                 │
                                 ▼
        ┌─────────────────────────────────────────────┐
        │              LEARNING STEP                   │──── ST302
        └─────────────────────────────────────────────┘
                                 │
                                 ▼
        ┌─────────────────────────────────────────────┐
        │           ACTUAL OPERATION STEP              │──── ST303
        └─────────────────────────────────────────────┘
                                 │
                                 ▼
                    ┌─────────────────────────┐
                    │           END           │
                    └─────────────────────────┘
```

FIG. 15

```
                    ┌─────────────────────────┐
                    │          START          │
                    └─────────────────────────┘
                                 │
                                 ▼
        ┌─────────────────────────────────────────────┐
        │      CALCULATION CONDITION RECEPTION STEP    │──── ST3011
        └─────────────────────────────────────────────┘
                                 │
                                 ▼
        ┌─────────────────────────────────────────────┐
        │      ABNORMALITY CONDITION GENERATION STEP   │──── ST3012
        └─────────────────────────────────────────────┘
                                 │
                                 ▼
        ┌─────────────────────────────────────────────┐
        │         WATER QUALITY SIMULATION STEP        │──── ST3013
        └─────────────────────────────────────────────┘
                                 │
                                 ▼
                    ┌─────────────────────────┐
                    │           END           │
                    └─────────────────────────┘
```

**EP 4 772 479 A1**

## INTERNATIONAL SEARCH REPORT

| International application No. |
|---|
| **PCT/JP2023/031151** |

| | |
|---|---|
| **A.    CLASSIFICATION OF SUBJECT MATTER** | |

*C02F 1/00*(2023.01)i; *G05B 23/02*(2006.01)i
FI:    C02F1/00 D; G05B23/02 302Y

According to International Patent Classification (IPC) or to both national classification and IPC

| **B.    FIELDS SEARCHED** |
|---|

Minimum documentation searched (classification system followed by classification symbols)

C02F1/00-3/34, G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.    DOCUMENTS CONSIDERED TO BE RELEVANT** |
|---|

| Category* | Citation of document, with indication, where appropriate, of the relevant passages | Relevant to claim No. |
|---|---|---|
| Y | JP 2013-215698 A (HITACHI, LTD.) 24 October 2013 (2013-10-24) claims 1-15, paragraphs [0015]-[0073], fig. 1-16 | 1, 4-5, 7-8, 11-12, 14 |
| A | | 2-3, 6, 9-10, 13 |
| Y | JP 2014-237071 A (HITACHI, LTD.) 18 December 2014 (2014-12-18) paragraphs [0060]-[0061] | 1, 4-5, 7-8, 11-12, 14 |
| Y | JP 2020-163302 A (KURITA WATER IND LTD.) 08 October 2020 (2020-10-08) paragraphs [0023]-[0025] | 1, 4-5, 7-8, 11-12, 14 |
| A | JP 2015-100766 A (HITACHI, LTD.) 04 June 2015 (2015-06-04) | 1-14 |
| A | JP 2012-138044 A (KABUSHIKI KAISHA TOSHIBA) 19 July 2012 (2012-07-19) | 1-14 |
| A | US 2018/0327292 A1 (SEMBCORP INDUSTRIES LTD.) 15 November 2018 (2018-11-15) | 1-14 |

| ☐ Further documents are listed in the continuation of Box C. | ☑ See patent family annex. |
|---|---|

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **07 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/031151**

| Patent document cited in search report | | | Publication date (day/month/year) | Patent family member(s) | | | Publication date (day/month/year) |
|---|---|---|---|---|---|---|---|
| JP | 2013-215698 | A | 24 October 2013 | (Family: none) | | | |
| JP | 2014-237071 | A | 18 December 2014 | CN | 104238542 | A | |
| | | | | IN | 2690CH2014 | A | |
| JP | 2020-163302 | A | 08 October 2020 | (Family: none) | | | |
| JP | 2015-100766 | A | 04 June 2015 | (Family: none) | | | |
| JP | 2012-138044 | A | 19 July 2012 | CN | 103562810 | A | |
| | | | | WO | 2012/090937 | A1 | |
| US | 2018/0327292 | A1 | 15 November 2018 | AU | 2017254356 | A1 | |
| | | | | CN | 107949814 | A | |
| | | | | EP | 3353613 | A1 | |
| | | | | WO | 2017/184073 | A1 | |

Form PCT/ISA/210 (patent family annex) (January 2015)

**EP 4 772 479 A1**

**REFERENCES CITED IN THE DESCRIPTION**

**Patent documents cited in the description**

- JP 2012138044 A